Europäisches Patentamt

European Patent Office

Office européen des brevets

(11) Veröffentlichungsnummer: **0 050 315**
**A1**

(12) **EUROPÄISCHE PATENTANMELDUNG**

(21) Anmeldenummer: **81108352.6**

(22) Anmeldetag: **15.10.81**

(51) Int. Cl.³: **F 16 L 3/20**

(30) Priorität: **17.10.80 DE 3039247**
**05.02.81 DE 3103914**

(43) Veröffentlichungstag der Anmeldung: **28.04.82**
**Patentblatt 82/17**

(84) Benannte Vertragsstaaten: **AT BE CH DE FR GB IT LI NL SE**

(71) Anmelder: **Teutsch, Rudolf, Ringstrasse 48, D-4300 Essen 17 (DE)**
Anmelder: **Seeck, Frank, Am Sonnenschein 12a, D-4300 Essen 17 (DE)**

(72) Erfinder: **Teutsch, Rudolf, Ringstrasse 48, D-4300 Essen 17 (DE)**
Erfinder: **Seeck, Frank, Am Sonnenschein 12a, D-4300 Essen 17 (DE)**

(74) Vertreter: **Patentanwaltsbüro Cohausz & Florack, Postfach 14 01 47, D-4000 Düsseldorf 1 (DE)**

(54) **Aufhängevorrichtung für eine Rohrleitung.**

(57) Die Erfindung betrifft eine Aufhängevorrichtung für Rohrleitungen. Sie weist ein die Rohrleitung haltendes Seil, Band oder Kette auf, das bzw. die von einer um seine Achse drehbar gelagerten zylindrischen Scheibe aufwickelbar ist, die von einer Spiralfeder in einer Drehrichtung beaufschlagt ist, die entgegengesetzt der durch die Rohrlast erzeugten Drehrichtung wirkt. Die Scheibe (6, 6a, 6b) ist koaxial zur Spiralfeder (5) gelagert, und eines der beiden Spiralfederenden ist unmittelbar über ein Übertragungsteil (8) mit der Scheibe (6) zur Übertragung des Drehmomentes verbunden.

EP 0 050 315 A1

# COHAUSZ & FLORACK   0050315

### PATENTANWALTSBÜRO

### SCHUMANNSTR. 97  D-4000 DÜSSELDORF 1

Telefon: (02 11) 68 33 46          Telex: 0858 6513 cop d

PATENTANWÄLTE:

Dipl.-Ing. W. COHAUSZ  ·  Dipl.-Ing. R. KNAUF  ·  Dipl.-Ing. H. B. COHAUSZ  ·  Dipl.-Ing. D. H. WERNER

- 1 -

Rudolf Teutsch

Ringstr. 48

4300 Essen 18

Frank Seeck

Am Sonnenschein 12a

4300 Essen 17

Aufhängevorrichtung für eine Rohrleitung

Die Erfindung betrifft eine Aufhängevorrichtung für eine Rohrleitung, mit einem die Rohrleitung haltenden Seil, Band oder Kette, das bzw. die von einem um seine Achse drehbar gelagerten zylindrischen Teil aufwickelbar ist, das von einer Spiralfeder in einer Drehrichtung beaufschlagt ist, die entgegengesetzt der durch die Rohrlast erzeugten Drehrichtung wirkt.

Rohrleitungen im Anlagenbau, z.B. bei Kraftwerken und in der chemischen Industrie, erfordern Trag- und Stützkonstruktionen. Diese müssen in der Lage sein, die wechselnden Belastungen aus den verschiedenen Lastfällen sicher und zerstörungsfrei aufzunehmen. Neben dem stets vorhandenen Eigengewicht sind schwankende Belastungen zu berücksichtigen, wie sie sich durch Änderung von

34 282 EU
HC/Be

Betriebsparametern, z.B. Druck, Temperatur, Massenstrom, aber auch unter äußeren Einflüssen durch Winddruck, Sonneneinstrahlung, Erdbeben ergeben können. Änderungen in der Belastung führen zu unterschiedlichen Beanspruchungen der Bauteile und/oder bewirken Verschiebungen.

Für eine ungehinderte Vertikalverschiebung bei gleichzeitiger Aufnahme des Rohrleitungsgewichts wurden Konstant-Gewichtskonstruktionen entwickelt, bei denen an einem Waagebalken ein dem Hebelübersetzungsverhältnis entsprechendes Gegengewicht dem Rohrleitungsgewicht über den gesamten Vertikalweg annähernd das Gleichgewicht hält. Derartige Vorrichtungen sind aufwendig und platzraubend. Die Umlenkelemente werden mit der doppelten Größe der Stützkraft belastet, so daß die Anschlußkonstruktion erheblich beansprucht wird.

Ferner sind Konstruktionen mit Schraubenfedern entstanden, bei denen versucht wurde, die Federreaktionskräfte durch ein Hebelsystem auszugleichen, um damit eine konstante Federkraft über den vertikalen Bewegungsweg der Rohrleitung zu erhalten. Derartige Konstruktionen erfordern komplizierte geometrische Formen und begrenzen die Ausgleichswege durch ihre maximal zulässigen Winkeländerungen. Auch bauen derartige Konstruktionen groß. Literatur: Oude-Hengel, H.H. "Rohrleitungen und Kraftwerke", TÜV-Handbücher, Band 1, Seite 302 ff.; VGB Kraftwerkstechnik 58, Heft 10, Oktober 1978, Seite 743 ff.

Aus den deutschen Auslegeschriften 12 81 756 und 17 75 584 ist es bekannt, eine Spiralfeder zur Erzeugung der Stützkraft zu verwenden, die über ein Kurbelgetriebe die erforderliche Stützkraft erzeugt. Bei diesen Vorrichtungen treten die oben zu Hebelsystemen genannten Nachteile auf. Auch ist die Vertikalverschiebung nicht ausreichend groß.

Aufgabe der Erfindung ist es, einen spiralgefederten Federhänger einfacher Konstruktion zu schaffen, der eine kompakte Bauweise, einen großen Verstellweg und eine ausreichend gleich bleibende Stützkraft aufweist.

Diese Aufgabe wird erfindungsgemäß dadurch gelöst, daß das drehbar gelagerte Teil eine Scheibe ist, die koaxial zur Spiralfeder gelagert ist, und daß eines der beiden Spiralfederenden unmittelbar über ein Übertragungsteil mit der Scheibe zur Übertragung des Drehmomentes verbunden ist.

Durch diese Vorrichtung wird eine wesentlich größere Vertikalverschiebung bei geringen äußeren Abmessungen erreicht. Die Vorrichtung ist einfach im Aufbau und erzeugt über den gesamten vertikalen Verstellweg eine ausreichend gleich bleibende Stützkraft.

Eine exakt gleich bleibende Stützkraft ist dadurch erreichbar, daß das zylindrische Teil eine koaxial zur Spiralfeder gelagerte Kurvenscheibe ist.

Aus den deutschen Auslegeschriften 12 01 633 und 11 90 270 als auch aus der deutschen Offenlegungsschrift 29 03 010 ist es zwar an sich bekannt, bei Konstanthängern Kurvenscheiben einzusetzen, aber diese ändern nur die Stützkraft einer Schraubenfeder. Der Verstellweg wird durch die Linearausdehnung der Schraubenfeder festgelegt, wodurch die Konstruktionen entweder groß werden oder der Verstellweg klein. Eine konstruktiv besonders einfache Lösung ist es, wenn die Scheibe kreisförmig ist.

Eine konstruktiv einfache, leicht zu montierende und eine einfache Verstellung der Feder zulassende Vorrichtung wird dadurch geschaffen, daß das äußere Federende der Spiralfeder an der Scheibe befestigt ist und das innere Federende an einem am Vorrichtungsgehäuse oder -gestell drehfest gelagerten Bolzen befestigt ist, auf dem die Scheibe drehbar gelagert ist. Dabei kann das äußere Federende mit der Scheibe über einen Stift oder eine Platte befestigt sein, der bzw. die parallel zum Bolzen angeordnet ist.

Die Federkraft kann insbesondere dadurch verändert werden, daß der Bolzen im Gehäuse oder Gestell drehverstellbar ist. Dabei wird vorgeschlagen, daß zur Drehverstellung des Bolzens dieser an einer Stirnseite eine nicht runde Ausnehmung oder Außenseite aufweist, in die oder auf die zu einer formschlüssigen Verbindung ein entsprechend geformter Teil einer Spannplatte oder Kurbel lösbar greift, die am Gehäuse oder Gestell arretierbar ist. Hierdurch wird eine konstruktiv einfache formschlüssige Kupplung zwischen dem Verstellteil und dem Bolzen erreicht. Eine sehr präzise Lastverstellung insbesondere bei großen Lasten wird dadurch erreicht, daß auf dem Bolzen drehfest ein Zahnrad koaxial befestigt ist, in dessen Verzahnung ein Stellzahnrad oder eine Schnecke zur Drehverstellung eingreift.

Zur alternativen Übertragung der Federdrehkraft auf die Scheibe wird vorgeschlagen, daß die Achse das Übertragungsteil ist und von einem drehbar gelagerten Bolzen gebildet wird, an dem das innere Federende und die Scheibe gegenüber dem Bolzen drehfest befestigt sind, wobei das äußere Federende am Gestell der Vorrichtung fest gelagert ist. Diese Konstruktion ist besonders einfach und wenig störanfällig.

Eine seitliche Auslenkung der Last aufgrund der Scheibe wird dadurch verhindert, daß unterhalb der Scheibe eine Rolle drehbar gelagert ist, um die das Seil, Band oder Kette umgelenkt ist. Hierdurch kann auch die Vorrichtung symmetrisch aufgehängt werden.

Vorzugsweise wird vorgeschlagen, daß zur Drehbegrenzung der Scheibe diese auf ihrem äußeren Rand neben dem Seil, Band oder Kette mindestens einen Anschlag aufweist, der an einem Gegenanschlag am Gestell oder Gehäuse zur Anlage gelangt. Alternativ wird vorgeschlagen, daß zur Drehbegrenzung der Scheibe diese in einer Seitenfläche eine koaxiale Ringnut aufweist, die durch mindestens einen Anschlag unterbrochen ist, der an einem Gegenanschlag am Gestell oder Gehäuse zur Anlage gelangt. Ferner kann die Scheibe zur Arretierung (Lastblockierung) Ausnehmungen, insbesondere achsparallele Bohrungen, aufweisen, in die ein Stift oder eine Schraube des Gestells oder Gehäuses einschiebbar ist. Dabei können die Ausnehmungen oder Bohrungen in der Ringnut angeordnet sein.

Um in jeder beliebigen Lastposition eine Arretierung der Scheibe vornehmen zu können, wird vorgeschlagen, daß der Stift oder die Schraube über einen kreisbogenförmigen Bereich parallel zu sich selbst verstellbar ist. Dabei sollte der kreisbogenförmige Bereich etwa mindestens so groß sein wie der Abstand der achsparallelen Bohrungen voneinander.

Zur exakten Anzeige der vertikalen Lastverschiebung wird vorgeschlagen, daß an der Scheibe eine Skala angeordnet ist, die gegenüber dem Gestell oder Gehäuse die vertikale Stellung der Last angibt.

Als technisch mögliche Ausführungsformen des flexiblen Elementes können Seile, Ketten oder Bänder verwendet werden. Durch entsprechende Führungen auf der Mantelfläche der Scheibe bzw. der Umlenkrolle ist das flexible Element gegen Auslenkungen zu sichern. Hierzu wird vorgeschlagen, daß Seile in Nuten, Ketten auf Verzahnungen und Bänder in Spurkränzen geführt werden.

Ausführungsbeispiele der Erfindung sind in den Zeichnungen schematisch dargestellt und werden im folgenden näher beschrieben. Es zeigen:

Fig. 1        eine isometrische Ansicht der Vorrichtung in übertrieben auseinandergezogenem Zustand zur Verdeutlichung mit einer Kurvenscheibe, die am äußeren Federende befestigt ist;

Fig. 1a       eine Ansicht der Vorrichtung entsprechend Fig. 1 mit einer Kurvenscheibe, die über einen drehbaren Lagerbolzen die Spiralfeder spannt;

Fig. 2        eine Seitenansicht der Kurvenscheibe nach Fig. 1;

0050315

Fig. 2a     eine Ansicht der Schmalseite des Scheibensektors;

Fig. 3     eine Seitenansicht eines kurvenförmigen Scheibensektors;

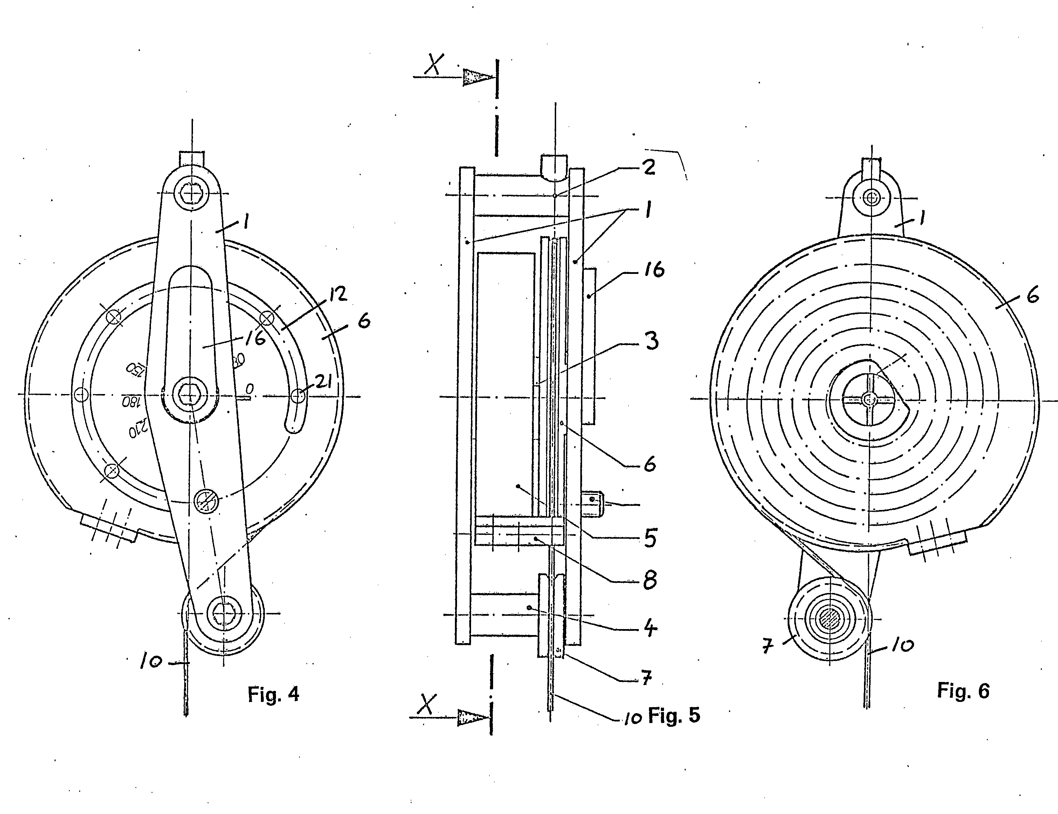

Fig. 4     eine Seitenansicht der Vorrichtung ohne Gehäuse;

Fig. 5     eine Ansicht der Schmalseite;

Fig. 6     eine Ansicht der gegenüberliegenden Seite zu Fig. 4;

Fig. 7     eine Seitenansicht der Vorrichtung mit umgebendem Gehäuse;

Fig. 8     eine Ansicht der Schmalseite nach Fig. 7;

Fig. 9 bis 13     verschiedene Ausführungen von Spannvorrichtungen für die Spiralfeder;

Fig. 14     eine Seitenansicht einer sektorförmigen Scheibe mit Anschlägen und Bohrungen einer Arretiervorrichtung;

Fig. 15     eine Seitenansicht einer verstellbaren Arretiervorrichtung;

Fig. 16     eine Seitenansicht einer Vorrichtung ohne Umlenkrolle und ohne Gehäuse;

Fig. 17     eine Seitenansicht entsprechend Fig. 16 mit Gehäuse;

Fig. 18    eine Seitenansicht zweier achsparallel aneinander befestigter Vorrichtungen;

Fig. 19    eine Seitenansicht zweier koaxial aneinander befestigter Vorrichtungen;

Fig. 20    eine Ansicht der Schmalseiten der Vorrichtungen entsprechend Fig. 19;

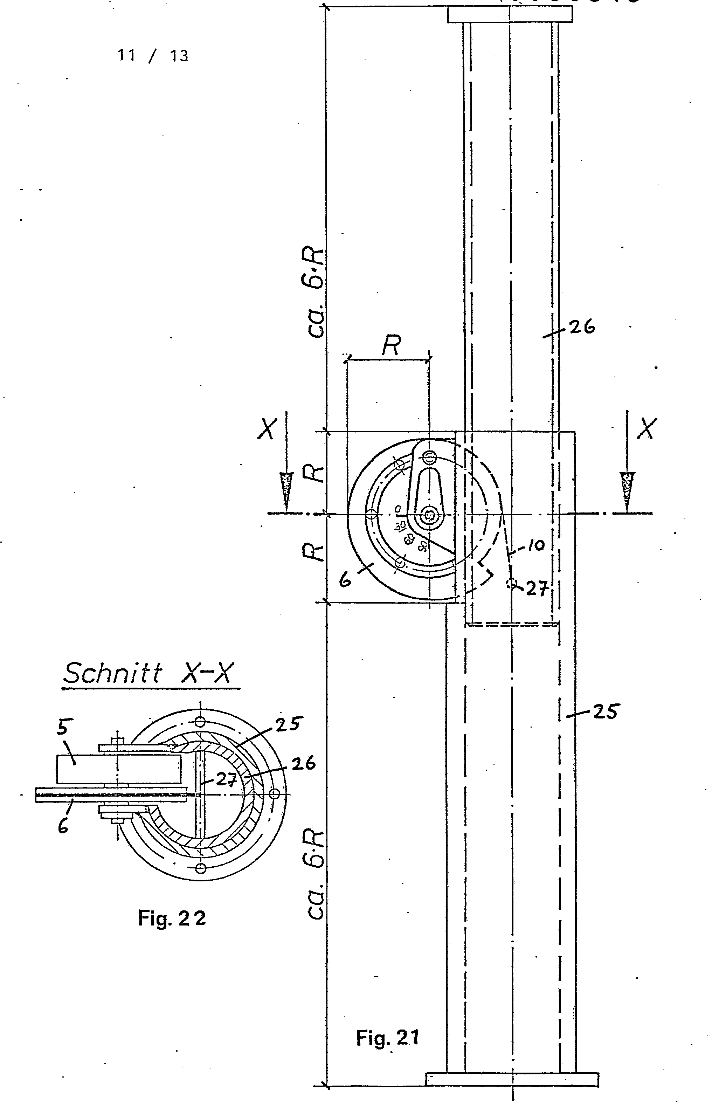

Fig. 21    eine Seitenansicht einer in der Höhe ver-
           stellbaren Stütze durch die erfindungsge-
           mäße Vorrichtung;

Fig. 22    einen waagerechten Schnitt durch die Stütze
           nach Fig. 21 längs der Linie X-X;

Fig. 23    eine Ansicht entsprechend Fig. 1 mit kreisförmiger Scheibe;

Fig. 24    eine Seitenansicht der Kreisscheibe nach
           Fig. 23;

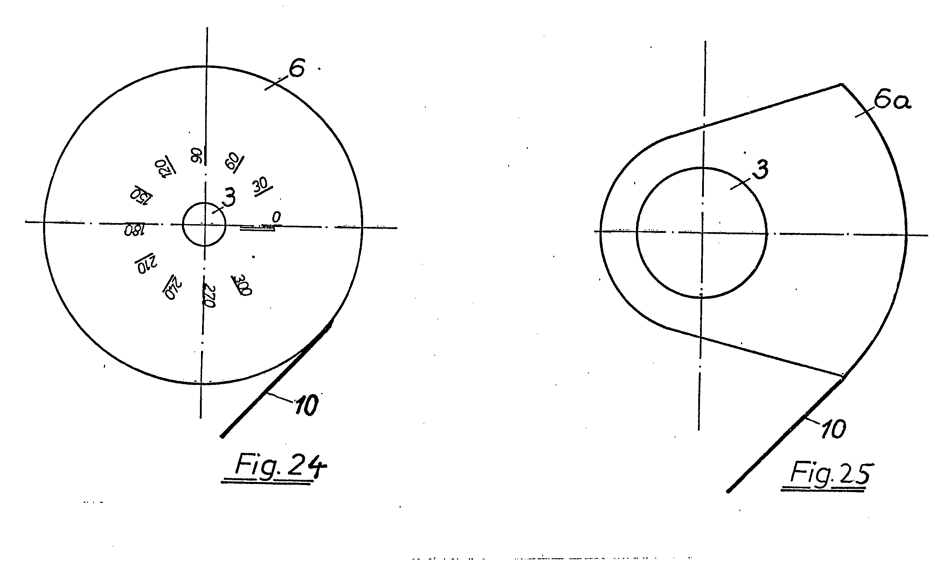

Fig. 25    eine Seitenansicht eines Kreisscheibensektors.

Zwei knieförmig um ca. 10 Grad abgewinkelte Lagerplatten 1 sind miteinander durch drei waagerechte Bolzen 2, 3, 4 verbunden, von denen der obere Bolzen 2 (Aufhängebolzen) zur Befestigung an einem Bauwerksteil dient, der in den Lagerplatten drehfest, aber drehverstellbare Bolzen 3 (Spannbolzen), eine Spiralfeder 5 und eine Scheibe 6 trägt und der untere Bolzen 4 (Umlenkbolzen) zur drehbaren Lagerung einer Umlenkrolle 7 dient.

0050315

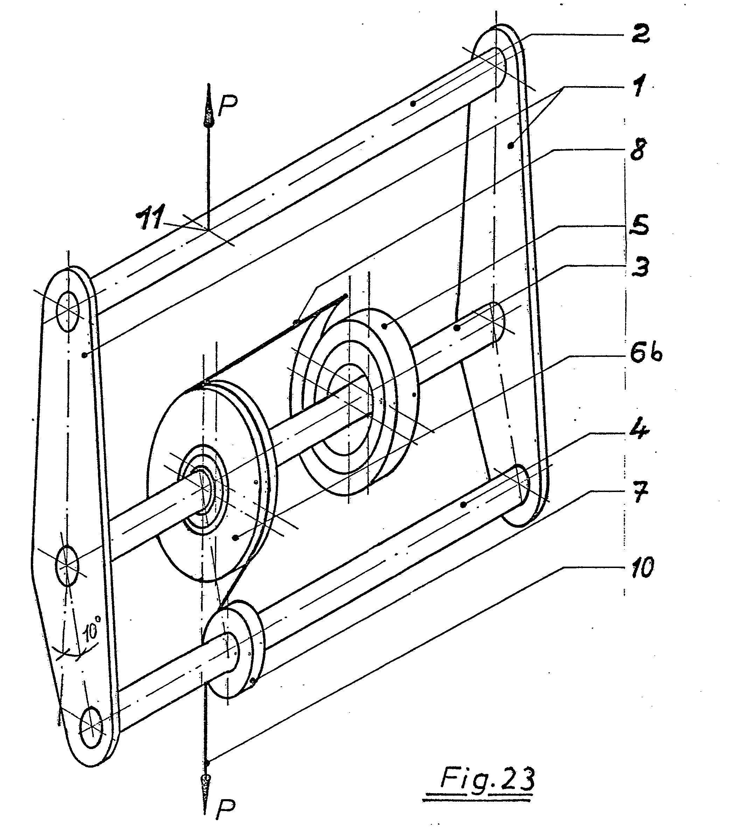

Spiralfeder 5 und Scheibe 6 sind koaxial auf dem Bolzen 3 angeordnet, wobei das innere Ende der Spiralfeder am Bolzen unbeweglich befestigt ist, während die Scheibe 6 auf dem Bolzen 3 drehbeweglich gelagert ist. Das äußere Ende der Spiralfeder 5 ist über einen waagerechten Stift 8, einen Bolzen oder eine Ankerplatte mit dem Rand der Scheibe 6 verbunden, so daß die Scheibe 6 durch die Spiralfeder 5 in Drehrichtung federbeaufschlagt ist. Die Scheibe kann eine zentrisch gelagerte Kreisscheibe 6b sein (Fig. 23 bis 25).

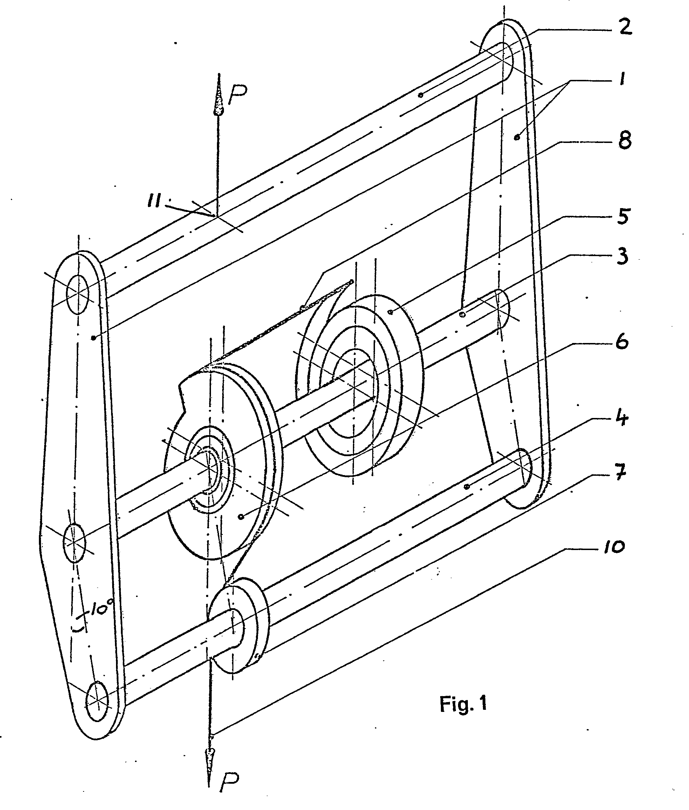

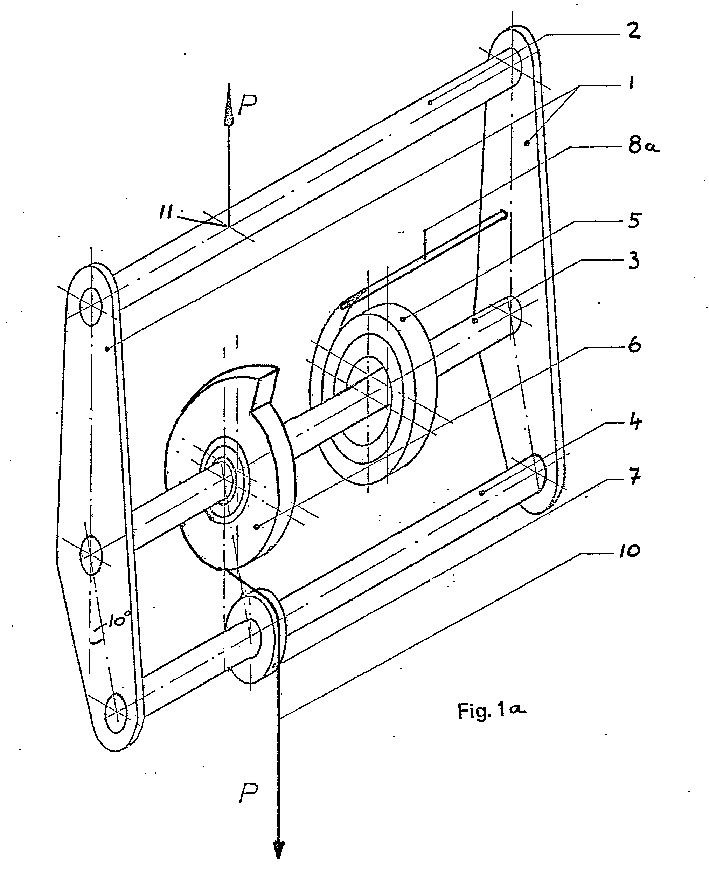

Alternativ kann die Scheibe eine Kurvenscheibe 6 sein (Fig. 1 bis 3). Der kurvenförmige zylindrische Rand der Scheibe 6 ist dann derart geformt, daß sein radialer Abstand von der Achse in gleichem Maße größer wird wie die Federreaktionskraft während des Drehens der Kurvenscheibe ansteigt, so daß auf ein auf den Kurvenrand aufgewickeltes Lastseil für eine senkrecht darunter liegende, nicht gezeigte Rohrleitung eine konstante Zugkraft erzeugt wird, unabhängig davon, wie weit innerhalb eines vorbestimmten Bereiches das Lastseil 9 auf die ansteigende Mantelfläche der Kurvenscheibe 6 aufgewickelt ist. In den Ausführungsbeispielen ist aufgrund der Form der Kurvenscheibe 6 eine Wicklung nur von 360° um die Kurvenscheibe durchführbar, so daß die Bewegungsstrecke der Last nicht größer sein kann als der Umfang der Kurvenscheibe. Alternativ kann aber auch die Kurvenscheibe das Lastseil 10 schraubenförmig aufwickeln, wobei der Durchmesser der Schraube entsprechend dem Federwiderstand wie schon bei der Kurvenscheibe ansteigt und die Schraubenwindungen nebeneinander koaxial liegen. Man kann hier von einer schraubenförmigen Kurvenscheibe mit ansteigendem Radius sprechen.

Auch die Kreisscheibe 6b kann das Lastseil 10 schraubenförmig aufwickeln, wobei der Durchmesser der Schraube wie schon bei der Kreisscheibe gleich bleibt und die Schraubenwindungen nebeneinander koaxial liegen. Man kann hier von einer schraubenförmigen Kreisscheibe mit gleichbleibendem Radius sprechen.

In der in Fig. 1a dargestellten Alternative ist das äußere Ende der Spiralfeder 5 am Gestell bzw. an einer Lagerplatte 1 durch einen Bolzen 8a unbeweglich befestigt. Das innere Ende der Spiralfeder 5 ist wieder am Bolzen 3 befestigt, der drehbar in den Lagerplatten 1 gelagert ist und auf dem die Kurvenscheibe 6 oder die Kreisscheibe 6b drehfest befestigt ist. Somit wird bei dieser Konstruktion die Feder 5 durch Drehen des Bolzens 3 gespannt.

Die Umlenkrolle 7 verhindert, daß entsprechend dem sich ändernden Radius der Kurvenscheibe 6 das Lastseil 10 sich seitlich bewegt. Hierzu liegt die Umlenkrolle 7 mit ihrem Umfang tangential an einer Ebene an, die durch die Achse der Spiralfeder und der Kurvenscheibe und damit des Spannbolzens 3 und durch den oberen Aufhängepunkt 11 der Vorrichtung verläuft. Damit verläuft diese Ebene auch durch die Achse des Aufhängebolzens 2. Die Achse der Umlenkrolle 7 befindet sich damit außerhalb dieser Ebene, in der sich auch das Lastseil 10 befindet und die üblicherweise senkrecht verläuft.

Als flexible Elemente können Seile, Ketten oder Bänder verwendet werden.

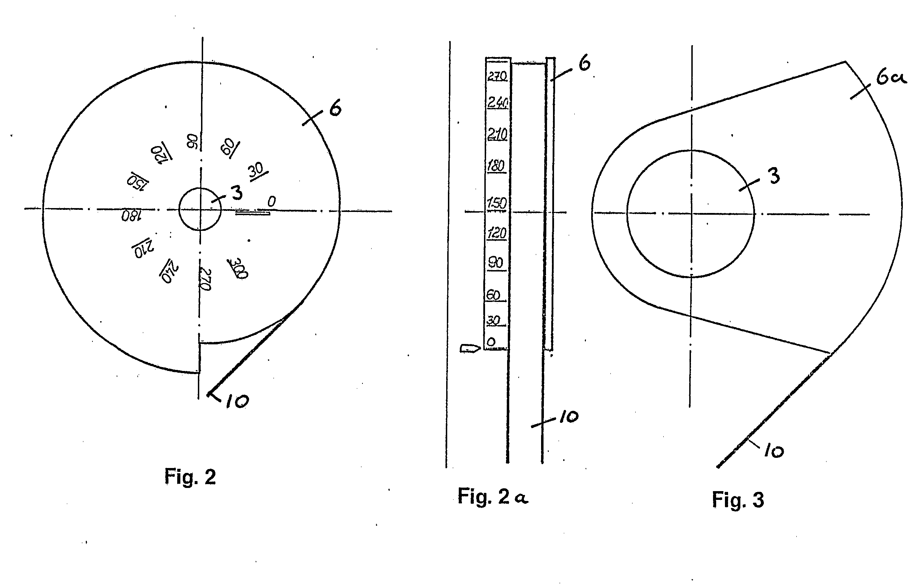

Wie in Fig. 2 gezeigt, kann auf der seitlichen Stirnseite der Scheibe eine Skala angebracht sein, die gegenüber dem von den Lagerplatten 1 und den Bolzen gebildeten Gestell die Drehstellung der Scheibe anzeigt. Damit sind auch auf dieser Skala die Stellungen der Rohrleitung und deren Wegstrecken ablesbar. Die Scheibe kann auch von einem Scheibensektor (Fig. 2a, Fig. 3 und gebildet sein, wobei in diesem Ausführungsbeispiel die Skala auf der Mantelfläche des Sektors angebracht ist.

In der seitlichen Stirnfläche der Scheibe 6 ist über einen größeren Drehbereich eine koaxiale Ringnut 12 eingefräst, in der eine an der Lagerplatte 1 befestigte Schraube 13 hineinreicht, wobei die Enden der Nut 12 Anlageflächen für die Schraube 13 bilden und damit den Drehweg der Scheibe begrenzen. In der Ringnut 12 sind zur Scheibenachse parallele Bohrungen in gleichmäßigen Abständen eingebracht, in die ein an der Lagerplatte 1 befestigter längsbeweglicher Stift, insbesondere auch die Schraube 13, einführbar ist, wodurch die Drehbewegung der Scheibe 6 arretierbar ist.

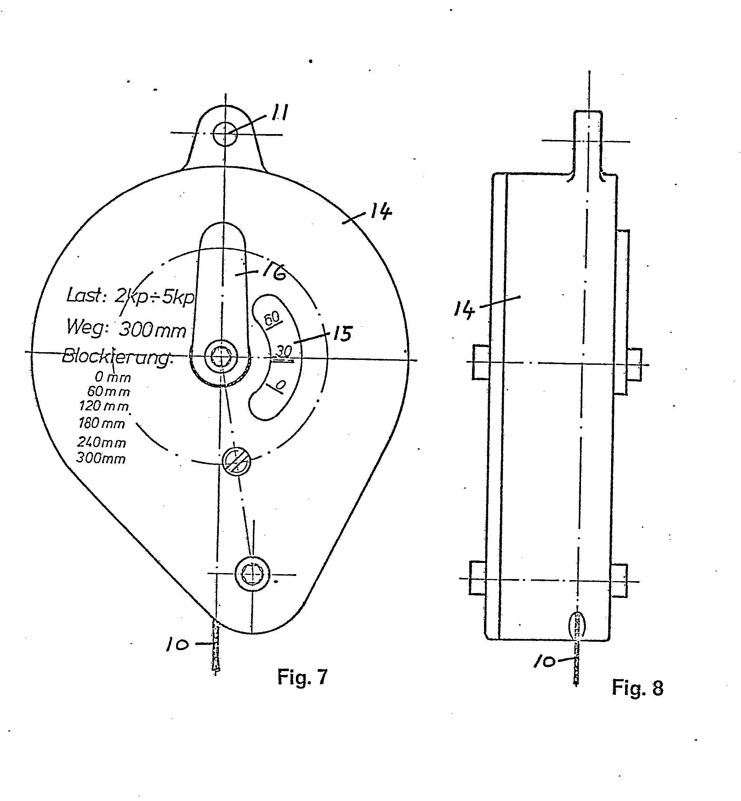

Statt des insbesondere von den Lagerplatten 1 gebildeten Gestells oder zusätzlich zu diesem kann die Vorrichtung von einem Gehäuse 14 umgeben sein, das bei fehlenden Lagerplatten 1 die Bolzen 2, 3 und 4 trägt und das Innere gegen Verschmutzen und grobe Einwirkungen schützt (Fig. 7 und 8). In dem Gehäuse ist ein Sichtfenster 15 für die auf der Scheibe 6 angebrachte Skala eingebracht.

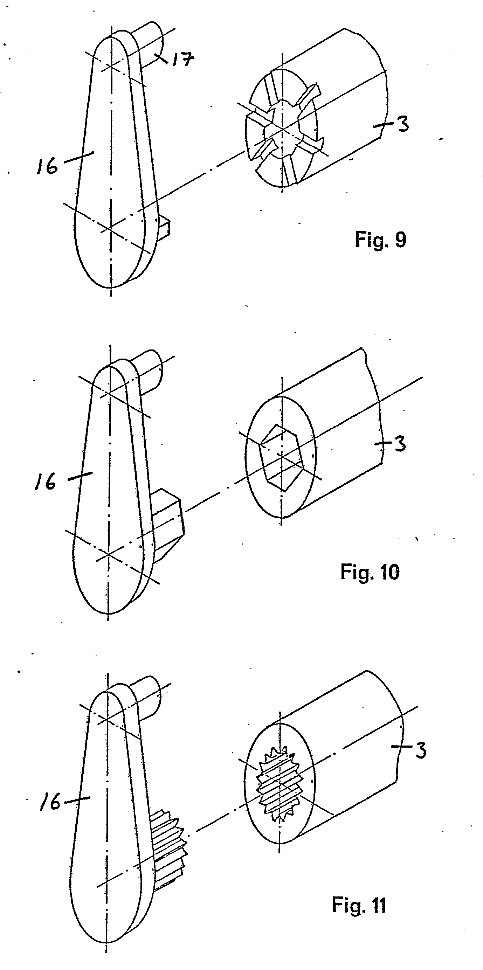

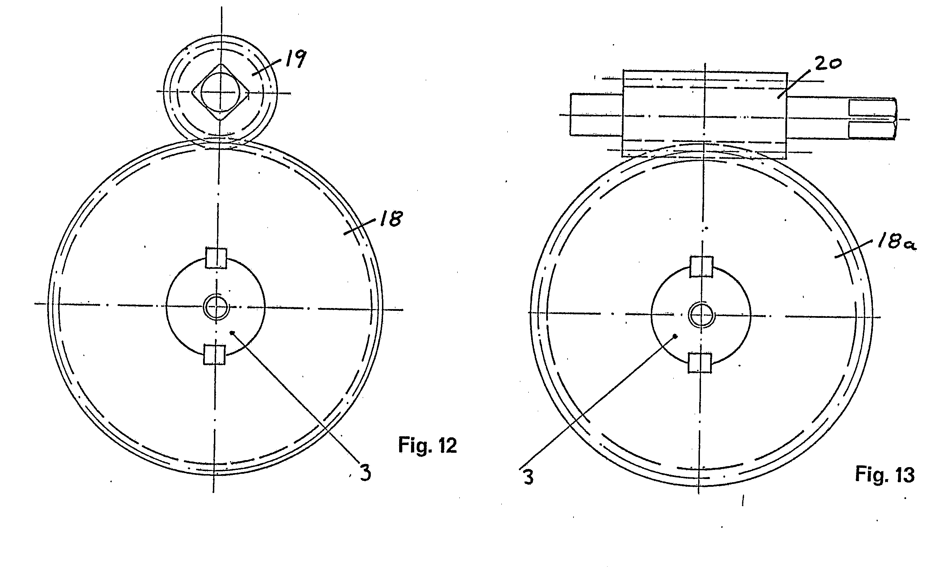

Die Stirnseite des Spannbolzens 3 bildet einen Teil einer Kupplung, in die außen an der Lagerplatte oder außen am Gehäuse 14 ein von einer Kurbel oder einer Spannplatte gebildetes Kupplungsteil eingreift (Fig. 9 bis 11). Hierzu kann die Stirnseite des Spannbolzens 3 Schlitze, einen Innensechskant oder eine innere HIRTH-Verzahnung aufweisen, in die ein entsprechend geformter Vorsprung an der Kurbel 16 eingreift. Die Spannplatte bzw. die Kurbel 16 sind an der Lagerplatte 1 oder dem Gehäuse 14 arretierbar. Hierzu kann die Kurbel 16 einen Zapfen aufweisen. Alternativ kann auch auf dem Spannbolzen ein Zahnrad 18 drehfest angeordnet sein, in das ein verstellbares Zahnrad 19 oder eine verstellbare Schnecke 20 eingreift (Fig. 12 und 13).

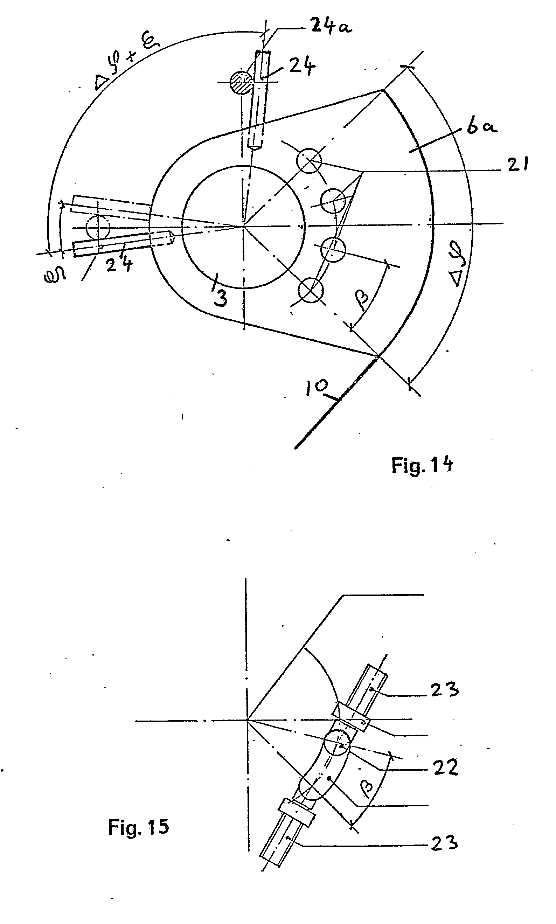

Entsprechend Fig. 14 kann auch die sektorförmige Scheibe 6a an der seitlichen Stirnseite Bohrungen 21 zur Arretierung bzw. Blockierung aufweisen. Hierzu ist ein koaxial beweglicher, am Gestell oder Gehäuse befestigter Blockierbolzen 22 in eine der Bohrungen 21 einschiebbar. Entsprechend Fig. 15 ist dieser Blockierbolzen 22 am Gehäuse, Gestell oder einer der Lagerplatten auf einem Kreisbogen achsparallel verstellbar, wobei diese Verstellung durch zwei zum Kreisbogen tangential angeordnete Stellschrauben durchführbar ist. Hierdurch sind auch Zwischenstellungen der sektorförmigen Scheibe zwischen den Bohrungen 21 erreichbar. An der Scheibe 6a radial angeordnete Bolzen 24 sorgen für eine begrenzte Drehbewegung des Sektors.

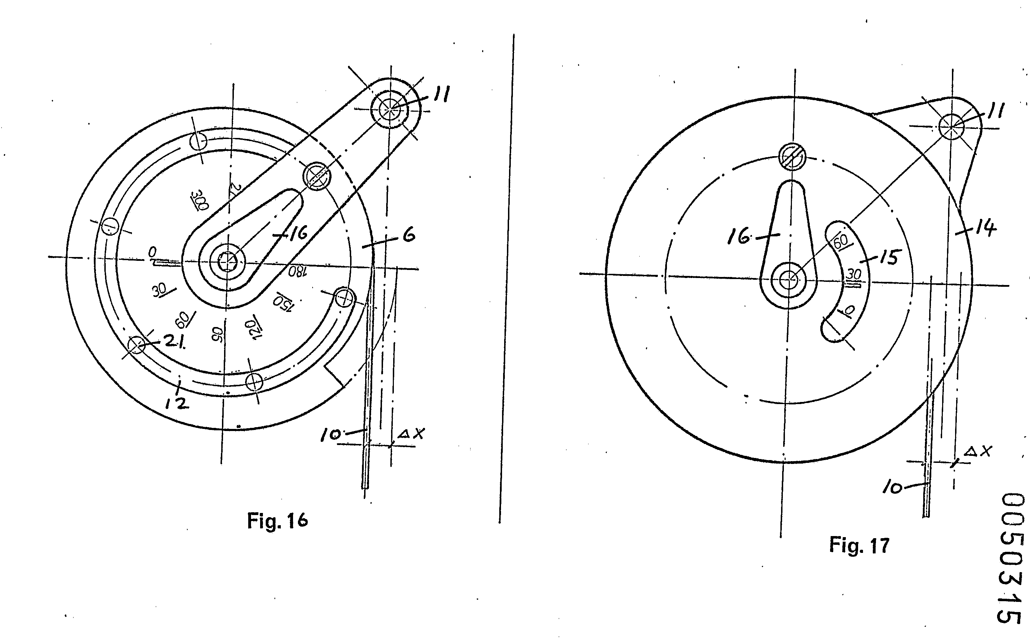

Die Vorrichtung kann auch ohne Umlenkrolle angeordnet sein. Entsprechende Ausführungen mit und ohne Gehäuse sind in den Figuren 16 und 17 dargestellt.

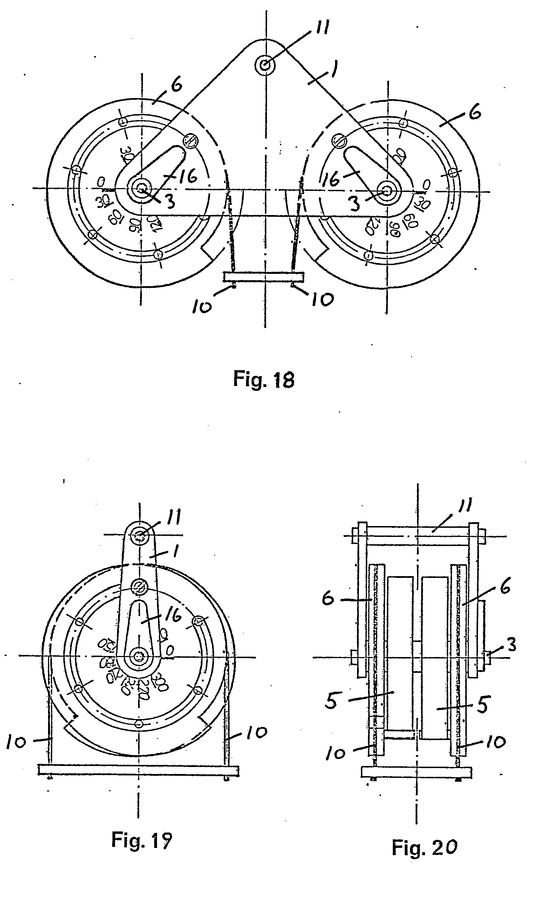

Ist eine besonders große Rohrleitungslast abzufangen, so können statt einer entsprechend groß dimensionierten Vorrichtung auch mehrere Vorrichtungen aneinander befestigt werden. Dabei können entsprechend Fig. 18 die Scheiben und Spiralfedern zueinander parallel angeordnet sein oder aber, wie in Fig. 19 und 20 gezeigt, zu-

- 13 -                                        0050315

einander koaxial. In der letzteren Ausführung ist die
Anordnung besonders klein bauend.

Die Vorrichtung kann auch dazu verwendet werden, eine
zweiteilige teleskopartige Stütze in Ausfahrrichtung
zu belasten. Dabei kann ein unteres senkrechtes Aufnahmerohr 25 das Gehäuse oder das Gestell der dazu seitlich
befestigten Vorrichtung tragen, wobei das obere in das
Rohr 25 eingesteckte Rohr 26 mit dem Lastseil verbunden
ist. Hierzu befindet sich im Rohr 26 eine diametral angeordnete Traverse 27. Das obere Rohr 26 ist zu einer
Länge aus dem unteren Rohr herausschiebbar, die dem
sechsfachen mittleren Radius R der Scheibe entspricht.
Das untere Rohr 25 besitzt eine Länge von 8 R.

# COHAUSZ & FLORACK  0050315

### PATENTANWALTSBÜRO

### SCHUMANNSTR. 97 D-4000 DÜSSELDORF 1

Telefon: (02 11) 68 33 46       Telex: 0858 6513 cop d

PATENTANWÄLTE:

Dipl.-Ing. W. COHAUSZ  ·  Dipl.-Ing. R. KNAUF  ·  Dipl.-Ing. H. B. COHAUSZ  ·  Dipl.-Ing. D. H. WERNER

- 14 -       29.9.81

## Ansprüche

1. Aufhängevorrichtung für eine Rohrleitung, mit einem die Rohrleitung haltenden Seil, Band oder Kette, das bzw. die von einem um seine Achse drehbar gelagerten zylindrischen Teil aufwickelbar ist, das von einer Spiralfeder in einer Drehrichtung beaufschlagt ist, die entgegengesetzt der durch die Rohrlast erzeugten Drehrichtung wirkt, d a d u r c h g e - k e n n z e i c h n e t , daß das drehbar gelagerte Teil eine Scheibe (6, 6a, 6b) ist, die koaxial zur Spiralfeder (5) gelagert ist, und daß eines der beiden Spiralfederenden unmittelbar über ein Übertragungsteil (8) mit der Scheibe (6) zur Übertragung des Drehmomentes verbunden ist.

2. Aufhängevorrichtung nach Anspruch 1, d a d u r c h g e k e n n z e i c h n e t , daß das zylindrische Teil eine koaxial zur Spiralfeder (5) gelagerte Kurvenscheibe (6) ist.

3. Aufhängevorrichtung nach Anspruch 1, d a d u r c h g e k e n n z e i c h n e t , daß die Scheibe kreisförmig ist.

4. Aufhängevorrichtung nach einem der Ansprüche 1 bis 3, d a d u r c h g e k e n n z e i c h n e t , daß das äußere Federende der Spiralfeder (5) an der Scheibe (6, 6a, 6b) befestigt ist und das innere

34 282 EU
HC/Be

Federende an einem am Vorrichtungsgehäuse (14) oder -gestell (1) drehfest gelagerten Bolzen (3) befestigt ist, auf dem die Scheibe (6) drehbar gelagert ist.

5. Aufhängevorrichtung nach Anspruch 4, d a d u r c h g e k e n n z e i c h n e t , daß das äußere Federende mit der Scheibe (6, 6a, 6b) über einen Stift (8) oder eine Platte befestigt ist, der bzw. die parallel zum Bolzen (3) angeordnet ist.

6. Aufhängevorrichtung nach Anspruch 4 oder 5, d a - d u r c h g e k e n n z e i c h n e t , daß der Bolzen (3) im Gehäuse (14) oder Gestell (1) drehverstellbar ist.

7. Aufhängevorrichtung nach Anspruch 6, d a d u r c h g e k e n n z e i c h n e t , daß zur Drehverstellung des Bolzens (3) dieser an einer Stirnseite eine nicht runde Ausnehmung oder Außenseite aufweist, in die oder auf die zu einer formschlüssigen Verbindung ein entsprechend geformter Teil einer Spannplatte oder Kurbel (16) lösbar greift, die am Gehäuse (14) oder Gestell (1) arretierbar ist.

8. Aufhängevorrichtung nach Anspruch 6, d a d u r c h g e k e n n z e i c h n e t , daß auf dem Bolzen (3) drehfest ein Zahnrad (18) koaxial befestigt ist, in dessen Verzahnung ein Stellzahnrad (19) oder eine Schnecke (20) zur Drehverstellung eingreift.

9. Aufhängevorrichtung nach einem der Ansprüche 1 bis 3, d a d u r c h g e k e n n z e i c h - n e t , daß die Achse das Übertragungsteil ist und von einem drehbar gelagerten Bolzen (3) gebildet wird, an dem das innere Federende und die Scheibe (6) gegenüber dem Bolzen drehfest befestigt sind, wobei das äußere Federende am Gestell der Vorrichtung fest gelagert ist.

10. Aufhängevorrichtung nach einem der Ansprüche 1 bis 9, d a d u r c h   g e k e n n z e i c h - n e t , daß unterhalb der Scheibe (6) eine Rolle (7) drehbar gelagert ist, um die das Seil (10), Band oder Kette umgelenkt ist.

11. Aufhängevorrichtung nach einem der Ansprüche 1 bis 10, d a d u r c h   g e k e n n z e i c h - n e t , daß zur Drehbegrenzung der Scheibe (6) diese auf ihrem äußeren Rand neben dem Seil, Band oder Kette mindestens einen Anschlag (24) aufweist, der an einem Gegenanschlag (24a) am Gestell (1) oder Gehäuse (14) zur Anlage gelangt.

12. Aufhängevorrichtung nach einem der Ansprüche 1 bis 10, d a d u r c h   g e k e n n z e i c h - n e t , daß zur Drehbegrenzung der Scheibe (6) diese in einer Seitenfläche eine koaxiale Ringnut (12) aufweist, die durch mindestens einen Anschlag unterbrochen ist, der an einem Gegenanschlag (13) am Gestell (1) oder Gehäuse (14) zur Anlage gelangt.

13. Aufhängevorrichtung nach einem der Ansprüche 1 bis 12, d a d u r c h   g e k e n n z e i c h - n e t , daß die Scheibe (6) zur Arretierung (Last-blockierung) Ausnehmungen, insbesondere achsparal-

lele Bohrungen (21), aufweist, in die ein Stift (22) oder eine Schraube des Gestells (1) oder Gehäuses (14) einschiebbar ist.

14. Aufhängevorrichtung nach Anspruch 13, d a d u r c h g e k e n n z e i c h n e t , daß die Ausnehmungen oder Bohrungen (21) in der Ringnut (12) angeordnet sind.

15. Aufhängevorrichtung nach Anspruch 13 oder 14, d a - d u r c h g e k e n n z e i c h n e t , daß der Stift (22) oder die Schraube über einen kreisbogenförmigen Bereich parallel zu sich selbst verstellbar ist.

16. Aufhängevorrichtung nach Anspruch 15, d a d u r c h g e k e n n z e i c h n e t , daß der kreisbogenförmige Bereich etwa mindestens so groß ist wie der Abstand der achsparallelen Bohrungen (21) voneinander.

17. Aufhängevorrichtung nach einem der Ansprüche 1 bis 16, d a d u r c h g e k e n n z e i c h - n e t , daß an der Scheibe (6) eine Skala angeordnet ist, die gegenüber dem Gestell (1) oder Gehäuse (14) die vertikale Stellung der Last angibt.

18. Aufhängevorrichtung nach einem der Ansprüche 1 bis 17, d a d u r c h g e k e n n z e i c h - n e t , daß die Scheibe von einem Sektor (6a) gebildet ist.

19. Aufhängevorrichtung nach einem der Ansprüche 1

bis 18, d a d u r c h g e k e n n z e i c h n e t , daß die Achse der Scheibe, der Aufhängepunkt (11) der Vorrichtung, das Seil (10), Band oder Kette und derjenige Mantelbereich der Rolle (7), an dem das von der Last kommende Seil (10), Band oder Kette die Rolle (7) zuerst berührt, in derselben, vorzugsweise senkrechten Ebene liegen.

20. Aufhängevorrichtung nach Anspruch 19, d a d u r c h g e k e n n z e i c h n e t, daß die Achse der Rolle (7) außerhalb dieser Ebene liegt.

21. Aufhängevorrichtung nach Anspruch 1 bis 20, d a - d u r c h g e k e n n z e i c h n e t , daß das Seil oder Band in einer Nut auf der Mantelfläche der Scheibe (6) bzw. der Rolle (7) geführt wird.

22. Aufhängevorrichtung nach Anspruch 1 bis 20, d a - d u r c h g e k e n n z e i c h n e t , daß die Kette mit Hilfe von Zähnen und/oder Ausnehmungen auf der Mantelfläche der Scheibe (6) bzw. der Rolle (7) geführt wird.

23. Aufhängevorrichtung nach Anspruch 1 bis 20, d a - d u r c h g e k e n n z e i c h n e t, daß das Band durch seitliche Überhöhungen (Spurkränze) auf der Mantelfläche der Scheibe (6) bzw. der Rolle (7) geführt ist.

0050315

Fig. 1

Fig. 1a

Fig. 2

Fig. 2 a

Fig. 3

0050315

Fig. 4

Fig. 5

Fig. 6

0050315

0050315

Last: 2kp÷5kp

Weg: 300mm

Blockierung:
0 mm
60 mm
120 mm
180 mm
240mm
300mm

**Fig. 7**

**Fig. 8**

Fig. 9

Fig. 10

Fig. 11

Fig. 13

Fig. 12

0050315

Fig. 14

Fig. 15

0050315

Fig. 17

Fig. 16

0050315

Fig. 18

Fig. 19

Fig. 20

0050315

ca. 6·R

R

R

R

R

X

X

26

10

27

6

25

ca. 6·R

## Schnitt X-X

5

25

26

27

6

**Fig. 22**

**Fig. 21**

Fig.23

0050315

Fig. 25

Fig. 24

Europäisches
Patentamt

EUROPÄISCHER RECHERCHENBERICHT

Nummer der Anmeldung

0050315

EP 81108352.6

| Kategorie | Kennzeichnung des Dokuments mit Angabe, soweit erforderlich, der maßgeblichen Teile | betrifft Anspruch |
|---|---|---|
| A | US - A - 3 833 194 (SALTER) <br><br> + Gesamt + <br><br> ---- | 1 |

**EINSCHLÄGIGE DOKUMENTE**

**KLASSIFIKATION DER ANMELDUNG (Int. Cl.)**

F 16 L 3/20

**RECHERCHIERTE SACHGEBIETE (Int. Cl.)**

F 16 L 3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 08-01-1982 | SCHUGANICH |

EPA form 1503.1  06.78